# EUROPÄISCHE PATENTANMELDUNG

(11) **EP 1 077 334 A1**
(43) Veröffentlichungstag der Anmeldung: **21.02.2001**
(21) Anmeldenummer: 00116367.4
(22) Anmeldetag: 28.07.2000
(51) Int. Cl.: F16C 11/06

(54) **Kugelgelenk**

(30) Priorität: 16.08.1999 DE 19937888
(71) Anmelder: Sachsenring Entwicklungsgesellschaft mbH, 08058 Zwickau (DE)
(72) Erfinder: Strauch, Jürgen, Dipl.-Ing., 08115 Lichtentanne (DE); Wackes, Ullrich, Ing., 08115 Lichtentanne (DE)
(74) Vertreter: Rumrich, Gabriele

(57) **Zusammenfassung**

Die Erfindung betrifft ein Kugelgelenk, welches ein Gehäuse (1) mit einem Hohlraum (1.1) zur Aufnahme einer in einer Gleitschale (2) beweglich gelagerten Kugel (3) eines Kugelzapfens (4) aufweist, mit einer Öffnung (1.2) in dem in Richtung zum Kugelzapfen (4) weisenden Randbereich (1.4) des Gehäuses, durch welche der Kugelzapfen (4) ragt, mit einem Zwischenraum zwischen der Wandung des Hohlraums (1.1) des Gehäuses (1) und der Außenwandung der Gleitschale (2), der mit einem injizierfähigen Material (5) gefüllt ist, mit einer der Öffnung (1.2) gegenüberliegenden Montageöffnung (1.3) im Gehäuse (1) zum Einlegen der in der Gleitschale (2) angeordneten Kugel (3) des Kugelzapfens (4) in das Gehäuse (1), mit mindestens einer durch die Wandung des Gehäuses (1) zu dessen Hohlraum (1.1) führenden Zuführöffnung für die Injektion des injizierfähigen Materials (5) und bedarfsweise mit einer in Richtung zum Kugelzapfen (4) angeordneten Aufnahme für einen Dichtungsbalg (6). Erfindungsgemäß weist die Öffnung (1.2) eine dem Schwenkwinkel (α) des Kugelzapfens (4) angepaßte Kontur auf.

## Beschreibung

Die Erfindung betrifft ein Kugelgelenk nach dem Oberbegriff des ersten Patentanspruchs, welches ein Gehäuse mit einem Hohlraum zur Aufnahme einer in einer Gleitschale beweglich gelagerten Kugel eines Kugelzapfens aufweist, mit einer Öffnung in dem in Richtung zum Kugelzapfen weisenden Randbereich des Gehäuses, durch welche der Kugelzapfen ragt, mit einem Zwischenraum zwischen der Wandung des Hohlraums des Gehäuses und der Außenwandung der Gleitschale, der mit einem injizierfähigen Material gefüllt ist, mit einer der Öffnung gegenüberliegenden Montageöffnung im Gehäuse zum Einlegen der in der Gleitschale befindliche Kugel des Kugelzapfens in das Gehäuse, mit mindestens einer durch die Wandung des Gehäuses zu dessen Hohlraum führenden Zuführöffnung für die Injektion des injizierfähigen Materials und mit einer in Richtung zum Kugelzapfen angeordneten Aufnahme für einen Dichtungsbalg.
Nach DE 296 17 276 U1 ist ein Kugelgelenk bekannt, welches ein mit einem Hohlraum versehenes Gehäuse aufweist, in dem eine Kugel in einer Lageschale beweglich gelagert ist. Die Lagerschale wird durch Einspritzen einer Kunststoffmasse zwischen der Innenwand der Aussparung des Kugelgelenkgehäuses und der Kugel gebildet. An der in Richtung zum Kugelzapfen weisenden Öffnung des Gehäuses ist außen eine radial umlaufende Ringnut angeordnet, in welcher eine Manschette beziehungsweise ein Balg aufgenommen wird, der zur Abdichtung des Kugelgelenkes dient. Die Herstellung dieser Ringnut als Aufnahme für die Manschette erfordert einen erhöhten Aufwand bei der Fertigung des Kugelgelenkes. Weiterhin ist bei derartigen Kugelgelenken nachteilig, daß durch die Schwindung des injizierten Materials (Kunststoffs) oft eine ungenügende Verriegelung zwischen dem injizierten Material und dem Gehäuse vorhanden ist und die erforderlichen axialen Ausreißkräfte nicht aufgenommen werden können. Bei allen gattungsgemäßen Kugelgelenken weist die in Richtung zum Kugelzapfen gerichtete Öffnung des Gehäuses eine kreisförmige Form auf, und deren Durchmesser ist dem maximalen Schwenkwinkel angepaßt, wodurch die Belastbarkeit weiter eingeschränkt wird.

Aufgabe der Erfindung ist es, ein Kugelgelenk zu entwickeln, welches eine zuverlässige Verriegelung zwischen Gehäuse und injiziertem Material gewährleistet und die axialen Ausreißkräfte aufnimmt.
Das Kugelgelenk weist dabei bekannter Weise ein Gehäuse mit einem Hohlraum und mindestens einer Öffnung zur Aufnahme einer in einer Lagerschale beweglich gelagerten Kugel eines Kugelzapfens auf. Der Zwischenraum zwischen der Wandung der Lagerschale und der Wandung des Hohlraumes des Gehäuses wird mit einem injizierbaren Material, vorzugsweise Kunststoff gefüllt. Das Injizieren des Materials erfolgt über mindestens eine Zuführöffnung. Weiterhin ist am Kugelgelenk bedarfsweise eine Aufnahme für einen Dichtungsbalg angeordnet. Erfindungsgemäß weist die Öffnung des Gehäuses eine dem Schwenkwinkel des Kugelzapfens angepaßte Kontur auf.
Dazu ist der jeweilige Abstand der im Gehäuses für das Hindurchragen des Kugelzapfens vorhandenen Öffnung zur Kugelzapfenachse bei Nullstellung (bei Schwenkwinkel α = Null) in einem ersten Bereich, in dem kein oder ein eingeschränkter Schwenkwinkel α auftritt, in ihrer Breite reduziert im Verhältnis zur Breite der Öffnung in einem zweiten Bereich, in welchem der erforderliche Schwenkwinkel α des Kugelzapfens zu gewährleisten ist. Die Öffnung weist dabei zumindest im zweiten Bereich eine zum Kugelmittelpunkt der Kugel gerichtete Abschrägung auf. Vorteilhafter Weise bildet der erweiterte zweite Bereich der Öffnung gleichzeitig einen Durchtritt für das injizierfähige Material, das entweder durch diesen zweiten Bereich der Öffnung oder über die Montageöffnung injiziert werden kann.

Wenn das injizierfähige Material durch den zweiten Bereich über die in Richtung zum Kugelzapfen weisende Öffnung des Gehäuses hinausragt, kann dadurch gleichzeitig der Anschlußbereich für die Aufnahme des Dichtungsbalges gebildet werden. Dabei schließt sich das injizierte Material an den in Richtung zum Kugelzapfen weisenden Randbereich des Gehäuses an.

Die Öffnung kann je nach Schwenkbewegung des Kugelzapfens symmetrisch oder asymmetrisch ausgebildet sein. Bei einer im wesentlichen geradlinigen Schwenkbewegung in einer Ebene rechtwinklig zur Längsachse des Kugelzapfens ist eine ovale Form der Öffnung vorteilhaft.
Die Öffnung kann jedoch auch asymmetrisch ausgebildet sein, wenn andere Schwenkbewegungen z.B. Taumelbewegungen erforderlich sind.

Mit der Erfindung wird eine einfache elegante konstruktive Gestaltung eines Kugelgelenkes geschaffen, wobei durch die im Durchmesser reduzierten Bereiche der Öffnung höhere axiale Ausreißkräfte aufgenommen werden können. Die dem Schwenkwinkel folgende Kontur der Öffnung mit ihren engeren ersten und den breiteren zweiten Bereichen garantiert weiterhin die Verdrehsicherung des injizierten Materials im Verhältnis zur Gleitschale und gleichzeitig eine elastische Schwenkwinkelbegrenzung.
Weiterhin wird durch die bereichsweise Verringerung der Öffnung des Kugelzapfens eine Erhöhung der Notlaufeigenschaften erzielt. Auch wenn die Innenflächen des Kugellagers und die Gleitschale vollkommen verschlissen sind, wird die Kugel noch im Gehäuse gehalten, da der Überdeckungsgrad zwischen der Öffnung des Gehäuses für den Kugelzapfens und Durchmesser der Kugel größer ist als bei herkömmlichen Lösungen.

Die Erfindung wird nachfolgend anhand von Ausführungsbeispielen und zugehörigen Zeichnungen näher erläutert. Es zeigen:
- Fig. 1:: Draufsicht auf ein Kugelgelenk mit ovaler Öffnung in Richtung zum Kugelzapfen,
- Fig. 1a:: schematische Darstellung des Überdeckungsgrades zwischen Gehäuseöffnung und Kugeldurchmesser gem. Fig. 1,
- Fig. 2:: Draufsicht auf ein Kugelgelenk mit asymmetrisch erweiterter Öffnung in Richtung zum Kugelzapfen,
- Fig. 2a:: schematische Darstellung des Überdeckungsgrades zwischen Gehäuseöffnung und Kugeldurchmesser gem. Fig. 2,
- Fig. 3:: Schnitt A-A gem. Fig. 1 durch ein Kugelgelenk
- Fig. 4:: Schnitt A-A gem. Fig. 2 durch ein Kugelgelenk mit am injiziertem Material befestigtem Dichtungsbalg
- Fig. 5:: Ausschnitt C der Befestigung des Dichtungsbalges gem. Fig. 3

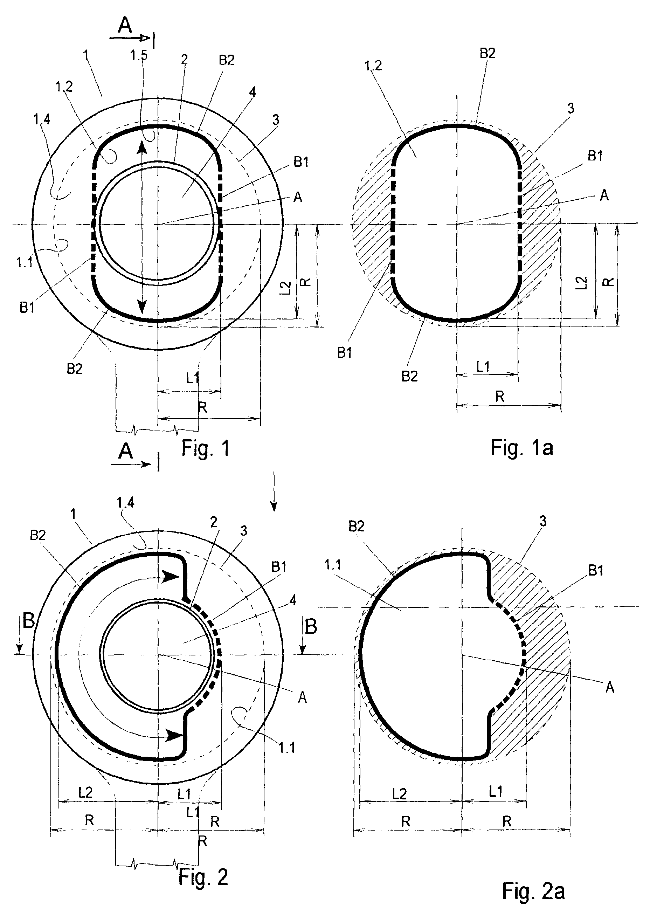

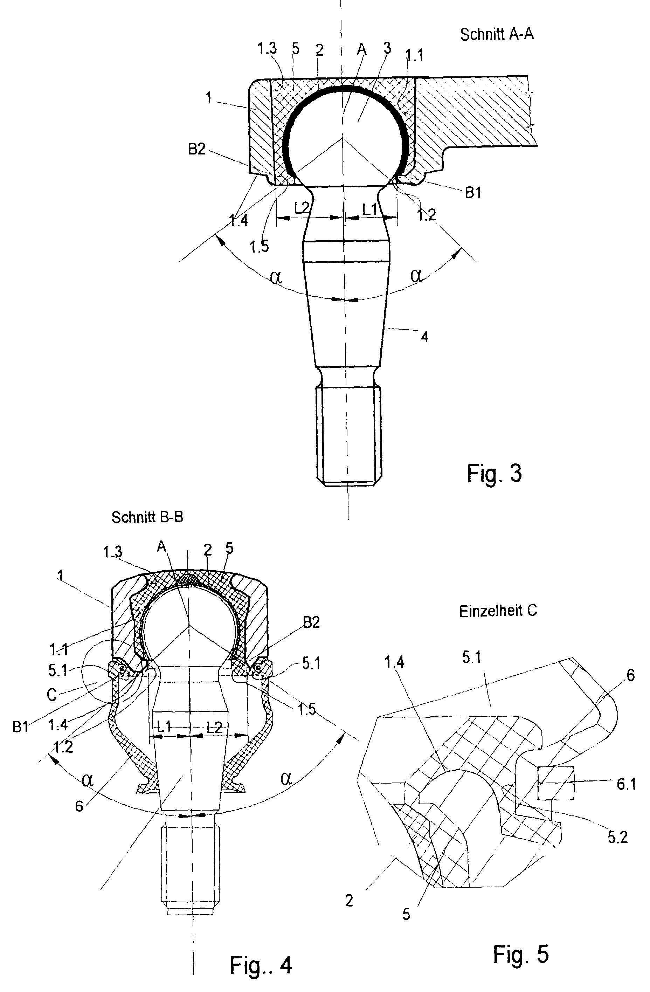

In Fig. 1 ist die Draufsicht eines Kugelgelenks in Richtung zur Kugelmitte mit ovaler Öffnung (langlochählnicher Öffnung) und in Fig. 2 mit asymmetrischer Öffnung ohne injiziertes Material dargestellt. Entsprechende Längsschnitte zeigen Fig. 3 und 4, wobei in den Längsschnitten das injizierte Material bereits eingebracht wurde. Das Gehäuse 1 des Kugelgelenks weist gem. Fig. 1 bis 4 einen Hohlraum 1.1 mit zwei sich gegenüberliegenden Öffnungen 1.2 und 1.3 auf. Die Stirnfläche 1.4 des Gehäuses 1, in welchem sich die Öffnung 1.2 befindet, ist gem. Fig. 1 mit einer ovalen (langlochähnlichen) Öffnung und gem. Fig. 2 mit einer asymmetrischen Öffnung versehen.
Der jeweilige Abstand der Öffnung 1.2 zur Kugelzapfenachse A bei Nullstellung ist dem erforderlichen Schwenkwinkel α angepaßt. Daher ist der Abstand L1 im Bereich B1, in welchem kein oder nur ein geringer Schwenkwinkel α gefordert wird, reduziert im Vergleich zum Abstand L2 der Öffnung 1.2 im Bereich B2, in welchem ein großer Schwenkwinkel α auftritt. Der Bereich B1 ist dabei fett und gestrichelt und der Bereich B1 fett als Durchgangslinie in Fig. 1, 1a und 2, 2a dargestellt.

Aus Fig. 1a und 2a ist dabei aus den schraffierten Flächen der Überdeckungsgrad zwischen der Öffnung 1.1 und dem Kugeldurchmesser D ersichtlich, der im Vergleich zu gattungsgemäßen Lösungen wesentlich größer ist, wodurch wie bereits vorgenannt beschrieben die Notlaufeigenschaften wesentlich verbessert werden.

In dem Gehäuse 1 ist gem. Fig. 3 die Lagerschale 2 mit der Kugel 3 eines Kugelzapfens 4 angeordnet. In den Hohlraum 1.1 des Gehäuses 1 wurde durch die Montageöffnung 1.3 die in der Lagerschale 2 beweglich gelagerte Kugel 3 des Kugelzapfens 4 eingebracht. Der Zwischenraum zwischen der unbearbeiteten Wandung des Hohlraums 1.1 des Gehäuses 1 und der Lagerschale 2 ist mit injizierfähigem Material 5 ausgefüllt. In Fig. 4 ist eine ähnliche Bauform dargestellt, jedoch reicht bei dieser Variante das injizierfähige Material 5 durch die Öffnung 1.2 des Gehäuses 1 über dessen oberen Rand 1.4 und bildet einen Anschlußbereich 5.1 für einen Dichtungsbalg 6. Durch die Verwendung des injizierten Materials werden dabei unbearbeitete rauhe Oberflächen des Hohlraums 1.1 und des Randbereiches 1.4 des Gehäuses 1 sowie Toleranzunterschiede des Hohlraumes 1.1 ausgeglichen. Der Randbereich im Bereich der Montageöffnung 1.3 wurde nach dem Einlegen der Kugel 3 des Kugelzapfens 4 in das Gehäuse 1 in Richtung zur Mitte des Gehäuses umgeformt, so daß auch der Durchmesser dieser Montageöffnung 1.3 kleiner ist als der Durchmesser der Kugel 2, wodurch eine weitere Erhöhung der Aufnahme axialer Außreißkräfte möglich ist.

Der Anschlußbereich 5.1 des injizierten Materials 5 weist dabei eine am Umfang radial umlaufende Nut 5.2 auf, in welcher der Dichtungsbalg über einen Verstärkungsring 6.1 durch Einknöpfen befestigt werden kann (Fig. 5).

Aus Fig. 3 und 4 wird auch deutlich, daß der Randbereich der Öffnung 1.2 im Bereich B1 wesentlich weiter in Richtung zur Achse A des Kugelzapfens 4 in Nullstellung liegt (L1<L2). Der Schwenkwinkel α ist in Richtung zum Bereich B1 eingeschränkt gegenüber dem Schwenkwinkel α in Richtung zum Bereich B. Durch diese neuartige Gestaltung können die aufnehmbaren axialen Außreißkräfte im Vergleich zu herkömmlichen Lösungen wesentlich erhöht werden.

Als injizierfähiges Material wird vorzugsweise Kunststoff verwendet, der auch mit einem Füllstoff (z.B. Glasfasern, Glaskugeln, Fasern oder Partikel nachwachsender Rohstoffe usw.) versetzt sein kann. Es besteht auch die Möglichkeit, Elastomere oder mineralische Füllstoffe beispielsweise auf der Basis von Glas oder anderen mineralischen Verbindungen als injizierfähiges Material zu verwenden.

Gemäß einer weiteren vorteilhaften nicht dargestellten Ausführungsvariante ist es möglich, den Dichtungsbalg auch mit dem Injizieren des Materials an den Aufnahmebereich fest und dicht anzuformen. Die Dichtungsbalgaufnahme kann dabei ebenfalls nicht wie herkömmlich rund sondern eine von der Kreisform abweichende z.B. eine ovale Form entsprechend der Form der Öffnung 1.1 aufweisen, wodurch die Verdrehsicherung des Dichtungsbalges zum Gehäuse gewährleistet wird.

## Patentansprüche

1. Kugelgelenk, welches ein Gehäuse (1) mit einem Hohlraum (1.1) zur Aufnahme einer in einer Gleitschale (2) beweglich gelagerten Kugel (3) eines Kugelzapfens (4) aufweist,
- mit einer Öffnung (1.2) in dem in Richtung zum Kugelzapfen (4) weisenden Randbereich (1.4) des Gehäuses, durch welche der Kugelzapfen (4) ragt,
- mit einem Zwischenraum zwischen der Wandung des Hohlraums (1.1) des Gehäuses (1) und der Außenwandung der Gleitschale (2), der mit einem injizierfähigen Material (5) gefüllt ist,
- mit einer der Öffnung (1.2) gegenüberliegenden Montageöffnung (1.3) im Gehäuse (1) zum Einlegen der in der Gleitschale (2) befindlichen Kugel (3) des Kugelzapfens (4) in das Gehäuse (1),
- mit mindestens einer durch die Wandung des Gehäuses (1) zu dessen Hohlraum (1.1) führenden Zuführöffnung für die Injektion des injizierfähigen Materials (5) und
- mit einer in Richtung zum Kugelzapfen (4) angeordneten Aufnahme für einen Dichtungsbalg (6),
**dadurch gekennzeichnet**,
daß die Öffnung (1.2) eine dem Schwenkwinkel (α) des Kugelzapfens (4) angepaßte Kontur aufweist.

2. Kugelgelenk nach Anspruch 1, **dadurch gekennzeichnet**, daß der Abstand (L1) der im Gehäuse (1) für das Hindurchragen des Kugelzapfens (4) vorhandenen Öffnung (1.2) zur Kugelzapfenachse (A) bei Nullstellung (bei Schwenkwinkel α = Null) des Kugelzapfens (4) in einem ersten Bereich (B1), in dem kein oder nur ein geringer Schwenkwinkel (α) auftritt, reduziert ist im Verhältnis zum Abstand (L2) der Öffnung (1.2) in einem zweiten Bereich (B2), in welchem der erforderliche Schwenkwinkel (α) des Kugelzapfens (4) zu gewährleisten ist.

3. Kugelgelenk nach Anspruch 1 oder 2, **dadurch gekennzeichnet**, daß die Öffnung (1.2) zumindest im zweiten Bereich (B2) eine zum Kugelmittelpunkt (M) der Kugel (3) weisende Abschrägung (7) aufweist.

4. Kugelgelenk nach einem der Ansprüche von 1 bis 3, **dadurch gekennzeichnet**, daß der zweite Bereich (B2) der Öffnung (1.2) einen Durchtritt (1.5) für das injizierfähige Material (5) bildet.

5. Kugelgelenk nach einem der Anspruch 1 oder 2, **dadurch gekennzeichnet**, daß der zweite Bereich (B2) der Öffnung (1.2) oder die Montageöffnung (1.3) die Zuführöffnung für das injizierfähige Material (5) bildet.

6. Kugelgelenk nach einem der Ansprüche von 1 bis 5, **dadurch gekennzeichnet**, daß das injizierfähige Material (5) durch den zweiten Bereich (B2) über die in Richtung zum Kugelzapfen (4) weisende Öffnung (1.2) des Gehäuses (1) hinausragt, und einen Anschlußbereich (5.1) für die Aufnahme des Dichtungsbalges (6) bildet.

7. Kugelgelenk nach einem der Ansprüche von 1 bis 6, **dadurch gekennzeichnet**, daß der Anschlußbereich (5.1) eine von der Kreisform abweichende Form aufweist.

8. Kugelgelenk nach einem der Anspruch 7, **dadurch gekennzeichnet**, daß der Anschlußbereich (5.1) entsprechend des Verlaufes der Öffnung (1.2) ausgebildet ist.
